# FASCICULE DE BREVET EUROPEEN

(11) **EP 3 976 408 B1**
(45) Date de publication et mention de la délivrance du brevet: **14.05.2025**
(21) Numéro de dépôt: 20729960.3
(22) Date de dépôt: 18.05.2020
(51) Int. Cl.: B60K 11/08

(54) **MODULE DE REFROIDISSEMENT POUR VÉHICULE AUTOMOBILE ÉLECTRIQUE À TURBOMACHINE TANGENTIELLE**
KÜHLMODUL MIT QUERSTROMGEBLÄSE FÜR ELEKTROFAHRZEUG
COOLING MODULE WITH TRANSVERSE FLOW FAN FOR ELECTRIC MOTOR VEHICLE

(30) Priorité: 24.05.2019 FR 1905466
(43) Date de publication de la demande: 06.04.2022
(73) Titulaire: VALEO SYSTEMES THERMIQUES, 78320 Le Mesnil Saint-Denis (FR)
(72) Inventeur: AZZOUZ, Kamel, 78322 LE MESNIL SAINT DENIS CEDEX (FR); GARNIER, Sébastien, 78322 LE MESNIL SAINT DENIS CEDEX (FR); LISSNER, Michael, 78322 LE MESNIL SAINT DENIS CEDEX (FR); MAMMERI, Amrid, 78322 LE MESNIL SAINT DENIS CEDEX (FR)
(74) Mandataire: Valeo Systèmes Thermiques
(86) Numéro de dépôt international: PCT/EP2020/063763
(87) Numéro de publication internationale: WO 2020/239485

(56) Documents cités:
- EP-A1- 1 715 157
- JP-A- H11 321 347
- US-A- 4 519 343

## Description

### Domaine technique

L'invention se rapporte au domaine de l'automobile, et plus particulièrement au domaine de la circulation d'air pour le refroidissement du moteur et de ses équipements.

### Technique antérieure

Les véhicules à moteur, qu'ils soient à combustion ou électriques, ont besoin d'évacuer les calories que génère leur fonctionnement et sont pour cela équipés d'échangeurs de chaleur. Un échangeur de chaleur de véhicule automobile comprend généralement des tubes, dans lesquels un fluide caloporteur est destiné à circuler, notamment un liquide tel que l'eau, et des éléments d'échange de chaleur reliés à ces tubes, souvent désignés par le terme « ailettes » ou « intercalaires ». Les ailettes permettent d'augmenter la surface d'échange entre les tubes et l'air ambiant.

Toutefois, afin d'augmenter encore l'échange de chaleur entre le fluide caloporteur et l'air ambiant, il est fréquent qu'un dispositif de ventilation soit utilisé en sus, pour générer ou accroitre un flux d'air dirigé vers les tubes et les ailettes.

De façon connue, un tel dispositif de ventilation comprend un ventilateur à hélice.

Le flux d'air généré par les pales d'un tel ventilateur est turbulent, notamment en raison de la géométrie circulaire de l'hélice, et n'atteint en général qu'une partie seulement de la surface de l'échangeur de chaleur (zone circulaire de l'échangeur faisant face à l'hélice du ventilateur). L'échange de chaleur ne se fait donc pas de façon homogène sur toute la surface des tubes et des ailettes.

En outre, lorsque la mise en marche du ventilateur ne s'avère pas nécessaire (typiquement lorsque l'échange de chaleur avec de l'air ambiant non accéléré suffit à refroidir le fluide caloporteur circulant dans l'échangeur), les pales obstruent en partie l'écoulement de l'air ambiant vers les tubes et les ailettes, ce qui gêne la circulation d'air vers l'échangeur et limite ainsi l'échange de chaleur avec le fluide caloporteur.

Un tel ventilateur est en outre relativement encombrant, à cause notamment des dimensions nécessaires de l'hélice pour obtenir un refroidissement moteur effectif, ce qui rend long et délicat son intégration dans un véhicule automobile.

Cette intégration est d'autant plus compliquée dans un véhicule électrique, dont la face avant laisse peu de place pour y loger les éléments de refroidissement du véhicule.

Un module de refroidissement pour véhicule automobile est connu du document US 4 519 343 A.

Le but de l'invention est de remédier au moins partiellement à ces inconvénients.

### Résumé

A cet effet, l'invention a pour objet un module de refroidissement pour véhicule automobile selon la revendication 1.

Ainsi, avantageusement, le ou les échangeurs thermiques présente/nt des dimensions adaptées pour n'être refroidi/s qu'au moyen d'une ou plusieurs baies de refroidissement inférieures. En outre, les turbomachines tangentielles permettent de créer un flux d'air à travers tous les échangeurs thermiques avec un bien meilleur rendement que si un ventilateur à hélice était mis en œuvre.

De surcroît, l'agencement des deux turbomachines permet de réduire voire d'éviter tout impact entre deux jets d'air sortant des turbomachines, ce qui assure au module de refroidissement une bonne performance aéraulique et acoustique .

Selon un autre aspect, l'axe de rotation de la première turbomachine tangentielle et l'axe de rotation de la deuxième turbomachine tangentielle sont montés parallèlement l'un à l'autre.

Selon un autre aspect, l'axe de rotation de la première turbomachine est disposé face à un bord d'extrémité de la surface de travail et l'axe de rotation de la deuxième turbomachine est disposé face à l'intérieur de la surface de travail.

Selon un autre aspect, la surface de travail est délimitée par une première direction, dite longueur, et une deuxième direction, dite hauteur, orthogonale à la longueur, l'axe de rotation de la deuxième turbomachine étant disposé dans une zone comprise entre un cinquième et quatre cinquième de ladite hauteur.

Selon un autre aspect, l'axe de rotation de la deuxième turbomachine est disposé dans une zone comprise entre un tiers et deux tiers de ladite hauteur.

L'invention a également pour objet un véhicule automobile à moteur électrique, comprenant une carrosserie, un pare-chocs et un tel que décrit précédemment, la carrosserie définissant au moins une baie de refroidissement disposée sous le pare-chocs, le module de refroidissement étant disposé en regard de la au moins une baie de refroidissement.

### Brève description des dessins

D'autres caractéristiques, détails et avantages de l'invention apparaîtront encore à la lecture de la description qui va suivre. Celle-ci est purement illustrative et doit être lue en regard des dessins annexés sur lesquels :
**Fig. 1**

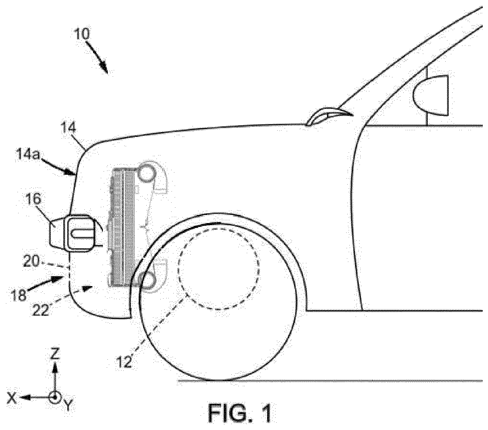

   [Fig. 1] représente schématiquement la partie avant d'un véhicule automobile à moteur électrique, vu de côté.
**Fig. 2**

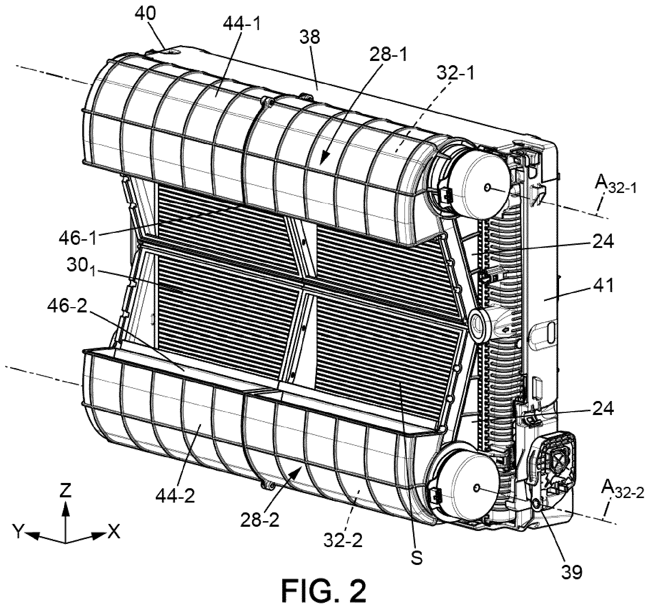

   [Fig. 2] est une vue en perspective d'un module de refroidissement qui ne fait pas partie de l'invention, des volets de guidage étant omis.
**Fig. 3**

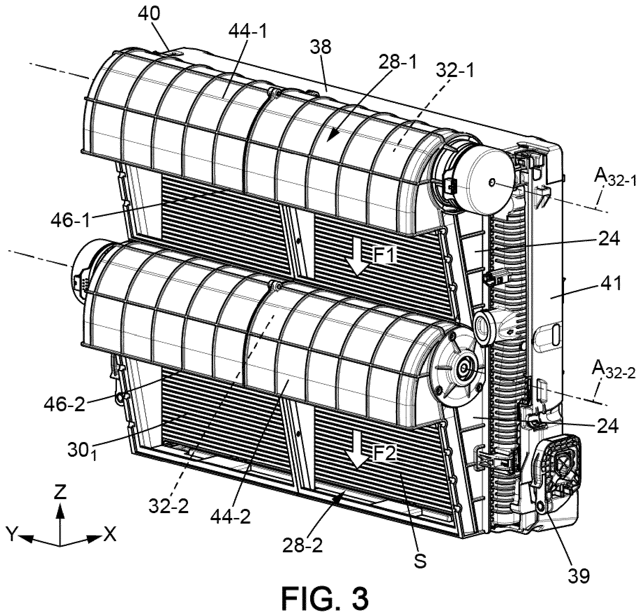

   [Fig. 3] est une vue en perspective d'un module de refroidissement selon un autre mode de réalisation, des volets de guidage étant omis.
**Fig. 4**

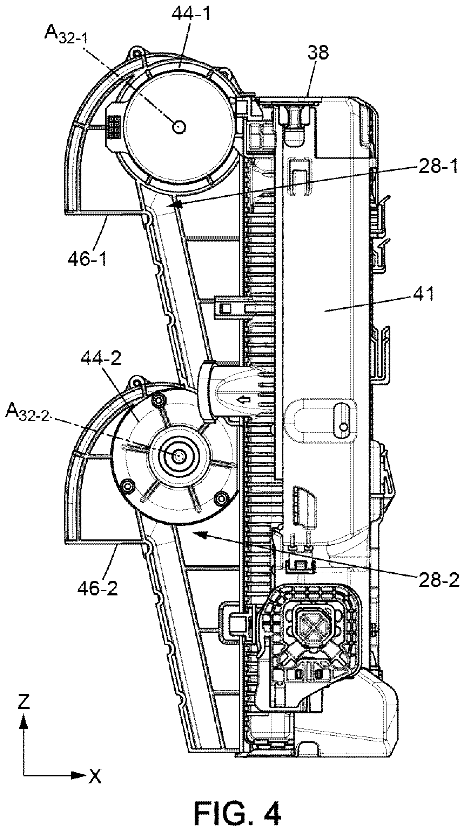

   [Fig. 4] est une vue de côté du module de la figure 3.
**Fig. 5**

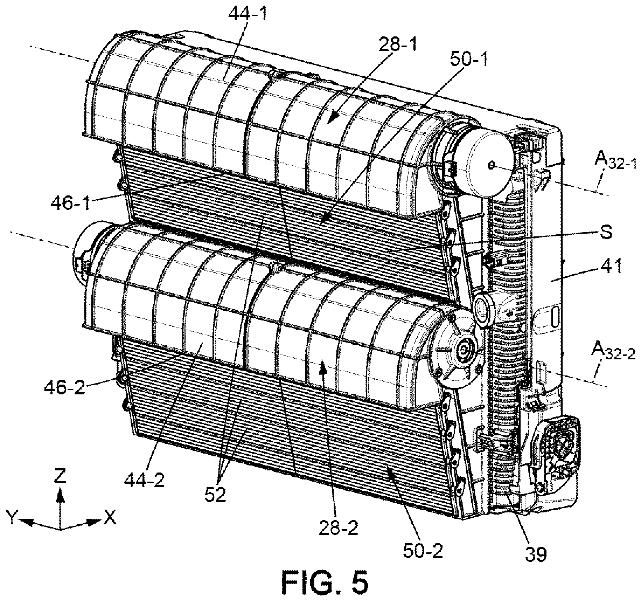

   [Fig. 5] est une vue en perspective du module de la figure 3, des volets de guidage étant illustrés.
**Fig. 6**

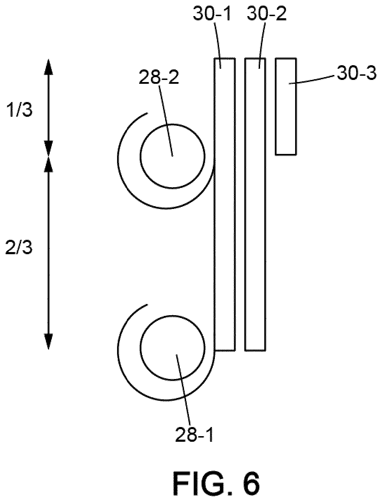

   [Fig. 6] est une vue schématique de côté d'une variante de réalisation du module de la figure 3.

### Description des modes de réalisation

Dans la suite de la description, les éléments identiques ou de fonction identique portent le même signe de référence. À fin de concision de la présente description, ces éléments ne sont pas décrits en détails dans chaque mode de réalisation. Au contraire, seules les différences entre les variantes de réalisation sont décrites en détails.

On note que, dans les exemples illustrés, qui sont préférés, chaque turbomachine fonctionne en aspiration, c'est-à-dire qu'elle aspire l'air ambiant pour le conduire au contact des différents échangeurs thermiques, comme il va être détaillés. Alternativement, cependant, chaque turbomachine fonctionne par soufflage, soufflant l'air vers les différents échangeurs thermiques.

La figure 1 illustre de manière schématique la partie avant d'un véhicule automobile 10 à moteur électrique 12. Le véhicule 10 comporte notamment une carrosserie 14 et un pare-chocs 16 portés par un châssis (non représenté) du véhicule automobile 10. La carrosserie 14 définit une baie de refroidissement 18, c'est-à-dire une ouverture à travers la carrosserie 14. La baie de refroidissement 18 est ici unique. Cette baie de refroidissement 18 se trouve en partie basse de la face avant 14a de la carrosserie 14. Dans l'exemple illustré, la baie de refroidissement 18 est située sous le pare-chocs 16. Une grille 20 peut être disposée dans la baie de refroidissement 18 pour éviter que des projectiles puissent traverser la baie de refroidissement 18. Un module de refroidissement 22 est disposé en vis-à-vis de la baie de refroidissement 18. La grille 20 permet notamment de protéger ce module de refroidissement 22.

Le module de refroidissement 22 comprend un dispositif de ventilation 24 associé à au moins un échangeur thermique.

Comme il ressort des figures, le dispositif de ventilation 1 comprend au moins un ventilateur tangentiel, aussi nommé turbomachine tangentielle ci-après, qui aspire un flux d'air F à destination de l'échangeur de chaleur ou des échangeurs de chaleur. Sur les modes de réalisation illustrés, le module de refroidissement comprend deux turbomachines 28-1, 28-2, détaillées ci-après.

Tel qu'illustré, le module de refroidissement 22 comporte essentiellement un boîtier ou carénage 24 formant un canal interne d'air. Le carénage 24 permet de loger au moins une turbomachine tangentielle. Une partie arrière du carénage forme notamment ici la volute d'une turbomachine tangentielle 28.

Comme il ressort des figures, les turbomachines 28-1, 28-2 permettent de refroidir un ou plusieurs échangeurs de chaleurs 30₁-30₃.

Chaque turbomachine tangentielle comprend un rotor ou turbine 32-1, 32-2 (ou hélice tangentielle). La turbine a une forme sensiblement cylindrique. La turbine comporte avantageusement plusieurs étages de pales (ou aubes). La turbine est montée rotative autour d'un axe de rotation A₃₂₋₁, A₃₂₋₂.

Les modes de réalisation des sont maintenant décrits.

Comme il ressort de ces figures, le module de refroidissement 22 comprend une première turbomachine 28-1 et une deuxième turbomachine 28-2, conformes à la turbomachine 28 décrite précédemment.

Sur les figures 2 à 6, l'ensemble des échangeurs thermiques délimitent une surface S, appelée surface de travail, dont une section est sensiblement rectangulaire dans un plan (Y, Z).

De préférence, la direction Y correspond à une direction horizontale tandis que la direction Z correspond à une direction verticale, quand le module est installé dans le véhicule automobile.

La surface S est délimitée par deux bords d'extrémité opposés 38, 39 s'étendant selon la direction Y, dite longueur, et par deux autres bords d'extrémité opposés 40, 41, selon la direction Z.

Sur la figure 5, la surface S correspond au rectangle défini par l'échangeur 30, ou si plusieurs échangeurs sont présents, par le plus grand échangeur thermique. Néanmoins, il est également possible de juxtaposer plusieurs échangeurs verticalement et/ou horizontalement, auquel cas la hauteur de la surface S est la somme des hauteurs des échangeurs juxtaposés verticalement (superposés), et la longueur de la surface S est la somme des longueurs des échangeurs juxtaposés horizontalement.

Les première et deuxième turbomachines 28-1 et 28-2 sont montées parallèlement l'une à l'autre, c'est-à-dire que l'axe de rotation A₃₂₋₁ de la turbine 32-1 de la première turbomachine 28-1 s'étend parallèlement à l'axe de rotation A₃₂₋₂ de la turbine 32-2 de la deuxième turbomachine 28-2.

Sur les figures 2 à 6, les axes de rotation A₃₂₋₁, A₃₂₋₂ sont parallèles à la direction Y, c'est-à-dire montés horizontalement. Néanmoins, bien entendu, l'invention n'est pas limitée à cette configuration et les axes de rotation A₃₂₋₁, A₃₂₋₂ peuvent être montés verticalement, c'est-à-dire parallèlement à l'axe Z.

Comme également visible sur les figures 2 à 6, la volute de la première turbomachine 28-1 comprend une portion de guidage 44-1 d'air autour de la turbomachine 32-1 jusqu'à une sortie de l'air hors du module, référencée 46-1. De manière connue, la portion de guidage d'air 44-1 comprend avantageusement une paroi en forme de spirale tronquée.

De manière analogue, la volute de la deuxième turbomachine 28-2 comprend une portion de guidage 44-2 d'air autour de la turbomachine 32-2 jusqu'à une sortie de l'air hors du module, référencée 46-2. La portion de guidage 44-2 comprend avantageusement une paroi en forme de spirale tronquée.

Selon le mode de réalisation de la figure 2, qui ne fait pas partie de l'invention, les deux sorties 46-1, 46-2 sont disposées en regard l'une de l'autre.

Selon le mode de réalisation des figures 3 à 6, la sortie d'air 46-1 de la première turbomachine 28-1 est disposée en regard de la portion de guidage 44-2 de la deuxième turbomachine 28-2, ce qui réduit nettement les ondes acoustiques générées par le module de refroidissement, par rapport à la configuration où les deux sorties se font face de la figure 2.

Cette configuration assure que la répartition d'air d'un flux d'air F1 issu de la première turbomachine 28-1 via la sortie associée 46-1 est sensiblement la même et en particulier dans le même sens que la répartition d'un flux d'air F2 issu de la deuxième turbomachine 28-2 via la sortie associée 46-2.

On note qu'un axe parallèle à la direction Z et passant par le milieu des longueurs de l'ensemble des échangeurs thermiques est un axe de symétrie de l'ensemble des deux turbomachines 28-1, 28-2.

Comme visible sur les figures 3 à 5, la partie 44-1, 44-2 du carénage de volute 24₂ est disposée au-dessus de la sortie respective 46-1, 46-2, et les flux d'air F1 et F2 sont sensiblement verticaux et vers le bas.

Ainsi, quand le véhicule se trouve dans un environnement humide voire mouillé, comme en cas de pluie ou de passage à gué, la turbomachine 28-1, 28-2 est protégée, puisque l'eau ne peut pas être stockée dans la volute mais au contraire est évacuée par la sortie 46-1, 46-2. De ce fait, toute submersion du module de refroidissement est évitée.

Comme il ressort également des figures, l'axe de rotation A₃₂₋₁ de la première turbomachine 28-1 est disposé face au bord d'extrémité 40 de la surface S et l'axe de rotation A₃₂₋₂ de la deuxième turbomachine 28-2 est disposé en regard de l'intérieur de la surface S.

Sur les figures 3 et 4, l'axe de rotation A₃₂₋₂ de la deuxième turbomachine 28-2 est disposé au milieu de la hauteur de la surface S.

Sur la figure 6, l'axe de rotation A₃₂₋₂ de la deuxième turbomachine 28-2 est disposé au tiers supérieur de la hauteur de la surface S.

Néanmoins, l'invention n'est pas limitée à ces géométries, et, selon la configuration des échangeurs thermiques et/ou la puissance de refroidissement requise pour chaque échangeur, il est possible de positionner les turbomachines de sorte à les dédier à des échangeurs respectifs.

Avantageusement, l'axe de rotation A₃₂₋₂ de la deuxième turbomachine 28-2 est disposé dans une zone comprise entre un cinquième et quatre cinquième de ladite hauteur, de préférence entre un tiers et deux tiers de ladite hauteur.

Comme illustré sur la figure 5, le module 22 est muni de moyen de guidage d'air 50-1, 50-2 associé à chaque turbomachine 28-1, 28-2.

Chaque moyen de guidage d'air 50-1, 50-2 comprend un ensemble de volets 52 montés pivotants entre une position de fermeture du module de refroidissement (comme visible sur la figure 4) et au moins une position d'ouverture du module de refroidissement (non illustrée).

La position d'ouverture est particulièrement avantageuse quand le véhicule roule à grande vitesse, auquel cas il est possible de mettre les turbomachines 28-1, 28-2 à l'arrêt.

Le nombre de volets 52 associés à la première turbomachine 28-1 peut être identique ou au contraire différent du nombre de volets 52 associés à la deuxième turbomachine 28-2, selon la position respective des turbomachines notamment.

## Revendications

1. Module de refroidissement (22) pour véhicule automobile (10), comprenant :
- au moins un échangeur thermique (30₁-30₃) délimitant une surface, dite surface de travail,
- au moins une première turbomachine tangentielle (28-1) et une deuxième turbomachine tangentielle (28-2), chacune desdites turbomachines (28-1, 28-2) étant apte à créer un flux d'air au contact de ladite surface de travail,
chacune desdites turbomachines comprenant un rotor en rotation autour d'un axe et une volute de logement du rotor, comportant une portion de guidage d'air (44-1, 44-2) et une sortie d'air (46-1, 46-2) hors de la turbomachine. lesdites turbomachines (28-1, 28-2) étant agencées de sorte que la sortie d'air de la première turbomachine (28-1) est disposée en regard de la portion de guidage de la deuxième turbomachine (28-2),
**caractérisé en ce que**
le module de refroidissement (22) comprend des volets de guidage d'air (52) montés pivotants entre une position de fermeture du module de refroidissement (22) et au moins une position d'ouverture du module de refroidissement (22), la portion de guidage d'air (44-1, 44-2) d'une turbomachine étant disposée au-dessus de sa sortie d'air (46-1, 46-2) respective, de façon à ce que les flux d'air (F1, F2) sont sensiblement verticaux et vers le bas.

2. Module de refroidissement selon la revendication précédente, dans lequel l'axe de rotation (A₃₂₋₁) de la première turbomachine tangentielle (28-1) et l'axe de rotation (A₃₂₋₂) de la deuxième turbomachine tangentielle (28-2) sont montés parallèlement l'un à l'autre.

3. Module de refroidissement selon l'une des revendications précédentes, dans lequel l'axe de rotation (A₃₂₋₁) de la première turbomachine (28-1) est disposé face à un bord d'extrémité (40) de la surface de travail (S) et l'axe de rotation (A₃₂₋₂) de la deuxième turbomachine (28-2) est disposé face à l'intérieur de la surface de travail (S).

4. Module de refroidissement selon la revendication précédente, dans lequel la surface de travail (S) est délimitée par une première direction, dite longueur (Y), et une deuxième direction, dite hauteur (Z), orthogonale à la longueur, l'axe de rotation (A₃₂₋₂) de la deuxième turbomachine (28-2) étant disposé dans une zone comprise entre un cinquième et quatre cinquième de ladite hauteur.

5. Module de refroidissement selon la revendication précédente, dans lequel l'axe de rotation (A₃₂₋₂) de la deuxième turbomachine (28-2) est disposé dans une zone comprise entre un tiers et deux tiers de ladite hauteur.

6. Véhicule automobile, comprenant une carrosserie (14), un pare-chocs (16) et un module de refroidissement (22) selon l'une quelconque des revendications précédentes, la carrosserie (14) définissant au moins une baie de refroidissement (18) disposée sous le pare-chocs, le module de refroidissement (22) étant disposé en regard de la au moins une baie de refroidissement (18).

## Patentansprüche

1. Kühlmodul (22) für ein Kraftfahrzeug (10), umfassend:
- mindestens einen Wärmetauscher (30₁-30₃), der eine Fläche, Arbeitsfläche genannt, begrenzt,
- mindestens eine erste Tangentialflussturbomaschine (28-1) und eine zweite Tangentialflussturbomaschine (28-2), wobei jede der Turbomaschinen (28-1, 28-2) geeignet ist, einen Luftstrom in Kontakt mit der Arbeitsfläche zu erzeugen, wobei jede der Turbomaschinen einen um eine Achse rotierenden Rotor und ein Spiralgehäuse zur Aufnahme des Rotors umfasst, das einen Luftleitabschnitt (44-1, 44-2) und einen Luftauslass (46-1, 46-2) aus der Turbomaschine beinhaltet, wobei die Turbomaschinen (28-1, 28-2) so gestaltet sind, dass der Luftauslass der ersten Turbomaschine (28-1) gegenüber dem Leitabschnitt der zweiten Turbomaschine (28-2) angeordnet ist, **dadurch gekennzeichnet, dass** das Kühlmodul (22) Luftleitklappen (52) umfasst, die schwenkbar zwischen einer Schließstellung des Kühlmoduls (22) und mindestens einer Öffnungsstellung des Kühlmoduls (22) montiert sind, wobei der Luftleitabschnitt (44-1, 44-2) einer Turbomaschine über ihrem jeweiligen Luftauslass (46-1, 46-2) angeordnet ist, so dass die Luftströme (F1, F2) im Wesentlichen vertikal und nach unten gerichtet sind.

2. Kühlmodul nach dem vorhergehenden Anspruch, wobei die Rotationsachse (A₃₂₋₁) der ersten Tangentialflussturbomaschine (28-1) und die Rotationsachse (A₃₂₋₂) der zweiten Tangentialflussturbomaschine (28-2) parallel zueinander montiert sind.

3. Kühlmodul nach einem der vorhergehenden Ansprüche, wobei die Rotationsachse (A₃₂₋₁) der ersten Turbomaschine (28-1) einem Endrand (40) der Arbeitsfläche (S) zugewandt angeordnet ist und wobei die Rotationsachse (A₃₂₋₂) der zweiten Turbomaschine (28-2) der Innenseite der Arbeitsfläche (S) zugewandt angeordnet ist.

4. Kühlmodul nach dem vorhergehenden Anspruch, wobei die Arbeitsfläche (S) durch eine erste Richtung, Länge (Y) genannt, und eine zweite Richtung, Höhe (Z) genannt, die senkrecht zu der Länge ist, begrenzt wird, wobei die Rotationsachse (A₃₂₋₂) der zweiten Turbomaschine (28-2) in einem Bereich zwischen einem Fünftel und vier Fünfteln der Höhe angeordnet ist.

5. Kühlmodul nach dem vorhergehenden Anspruch, wobei die Rotationsachse (A₃₂₋₂) der zweiten Turbomaschine (28-2) in einem Bereich zwischen einem Drittel und zwei Dritteln der Höhe angeordnet ist.

6. Kraftfahrzeug, umfassend eine Karosserie (14), einen Stoßfänger (16) und ein Kühlmodul (22) nach einem der vorhergehenden Ansprüche, wobei die Karosserie (14) mindestens einen Kühlausschnitt (18) definiert, der unter dem Stoßfänger angeordnet ist, wobei das Kühlmodul (22) gegenüber dem mindestens einen Kühlausschnitt (18) angeordnet ist.

## Claims

1. Cooling module (22) for a motor vehicle (10), comprising:
- at least one heat exchanger (30₁-30₃) delimiting a surface, referred to as the working surface,
- at least a first tangential-flow turbomachine (28-1) and a second tangential-flow turbomachine (28-2), each of said turbomachines (28-1, 28-2) being able to create an air flow in contact with said working surface,
each of said turbomachines comprising a rotor rotating about an axis and a volute for housing the rotor, having an air guiding portion (44-1, 44-2) and an air outlet (46-1, 46-2) from the turbomachine,
said turbomachines (28-1, 28-2) being arranged such that the air outlet of the first turbomachine (28-1) is disposed facing the guiding portion of the second turbomachine (28-2),
**characterized in that** the cooling module (22) comprises air guiding shutters (52) mounted so as to be able to pivot between a closed position of the cooling module (22) and at least one open position of the cooling module (22), the air guiding portion (44-1, 44-2) of a turbomachine being disposed above its respective air outlet (46-1, 46-2), in such a way that the air flows (F1, F2) are substantially vertical and downwards.

2. Cooling module according to the preceding claim, wherein the axis of rotation (A₃₂₋₁) of the first tangential-flow turbomachine (28-1) and the axis of rotation (A₃₂₋₂) of the second tangential-flow turbomachine (28-2) are mounted parallel to one another.

3. Cooling module according to either of the preceding claims, wherein the axis of rotation (A₃₂₋₁) of the first turbomachine (28-1) is disposed facing an end edge (40) of the working surface (S) and the axis of rotation (A₃₂-₂) of the second turbomachine (28-2) is disposed facing the inside of the working surface (S).

4. Cooling module according to the preceding claim, wherein the working surface (S) is delimited by a first direction, referred to as the length (Y), and a second direction, referred to as the height (Z), orthogonal to the length, the axis of rotation (A₃₂₋₂) of the second turbomachine (28-2) being disposed in a zone between one fifth and four fifths of said height.

5. Cooling module according to the preceding claim, wherein the axis of rotation (A₃₂₋₂) of the second turbomachine (28-2) is disposed in a zone between one third and two thirds of said height.

6. Motor vehicle, comprising a body (14), a bumper (16) and a cooling module (22) according to any one of the preceding claims, the body (14) defining at least one cooling opening (18) disposed beneath the bumper, the cooling module (22) being disposed facing the at least one cooling opening (18).
